# EUROPÄISCHE PATENTSCHRIFT

(11) **EP 3 956 653 B1**
(45) Veröffentlichungstag und Bekanntmachung des Hinweises auf die Patenterteilung: **03.06.2026**
(21) Anmeldenummer: 20711825.8
(22) Anmeldetag: 06.03.2020
(51) Int. Cl.: G01N 21/90, G01N 21/88

(54) **INSPEKTIONSVORRICHTUNG UND -VERFAHREN ZUR INSPEKTION VON BEHÄLTERN**
INSPECTION APPARATUS AND METHOD FOR INSPECTING CONTAINERS
DISPOSITIF ET PROCÉDÉ D'INSPECTION POUR L'INSPECTION DE RÉCIPIENTS

(30) Priorität: 18.04.2019 DE 102019205652
(43) Veröffentlichungstag der Anmeldung: 23.02.2022
(73) Patentinhaber: KRONES AG, 93073 Neutraubling (DE)
(72) Erfinder: WILL, Christof, 93073 Neutraubling (DE)
(74) Vertreter: Grünecker Patent- und Rechtsanwälte PartG mbB
(86) Internationale Anmeldenummer: PCT/EP2020/056005
(87) Internationale Veröffentlichungsnummer: WO 2020/212015

(56) Entgegenhaltungen:
- WO-A1-2014/087946
- WO-A1-2018/046122
- CN-A- 108 375 588
- FR-A3- 3 040 991
- JP-A- 2002 214 357

## Beschreibung

Die Erfindung betrifft eine Inspektionsvorrichtung und ein Inspektionsverfahren zur Inspektion von Behältern mit den Merkmalen des Oberbegriffs von Anspruch 1 bzw. 9.

In Behälterbehandlungsanlagen werden üblicherweise Inspektionsvorrichtungen und -verfahren verschiedenartigster Ausprägung dazu eingesetzt, die behandelten Behälter oder Teile davon mithilfe einer Kameraeinheit optisch zu inspizieren. Dabei werden die Behälter mittels eines Transporteurs transportiert und als Kamerabilder mit der Kameraeinheit erfasst. Anschließend werden die Kamerabilder von einer Bildauswerteeinheit automatisch ausgewertet, um fehlerhafte Behälter zu erkennen und dafür Korrekturmaßnahmen auszulösen. Beispielsweise können die fehlerhaften Behälter Verschleißerscheinungen, Risse, Abplatzer, Fremdkörper oder dergleichen aufweisen, die sich nachteilig auf das Produkt auswirken können. Denkbar ist auch die Inspektion der Qualität eines Direktdrucks oder eines am Behälter aufgebrachten Etiketts. Durch die nachfolgenden Korrekturmaßnahmen wird dann sichergestellt, dass die fehlerhaften Behälter so nicht den Endverbraucher erreichen. Beispielsweise kann es sich bei den Korrekturmaßnahmen um ein Ausschleusen aus dem Behälterstrom oder einen zusätzlichen Reinigungsschritt handeln. Bei einem Direktdruck ist beispielsweise denkbar, dass ein fehlerhafter Aufdruck nach der Inspektion mit einem Korrekturdruck korrigiert wird.

Die DE 20 2004 007 783 U1 offenbart eine Inspektionsvorrichtung mit wenigstens einer Kamera zum Inspizieren von Gegenständen und mit einer Bildauswerteinrichtung.

Die DE 102014 105 548 A1 offenbart eine Inspektionsvorrichtung für Behälter und/oder Gebinde und ein computerimplementiertes Verfahren zum Inspizieren von Behältern und/oder Gebinden.

Die WO 2014/087946 A1 offenbart ferner eine Inspektionsvorrichtung zur Inspektion von als Kunststoffflaschen, Glasflaschen, Dosen und/oder Tuben ausgebildeten Behältern, mit einem Transporteur zum Transport der Behälter als Behälterstrom, mit einer Kameraeinheit, welche die Behälter optisch als Kamerabilder erfasst, und mit einer Bildauswerteeinheit, die über eine erste Bilddatenverbindung mit der Kameraeinheit verbunden und zur automatischen Auswertung der Kamerabilder zur Laufzeit ausgebildet ist, um fehlerhafte Behälter zu erkennen und dafür Korrekturmaßnahmen auszulösen. Die Inspektionsvorrichtung ist zudem über eine zweite Bilddatenverbindung mit einer Archivierungseinheit für Kamerabilder verbunden. In dieser können Kamerabi-lder bei Bedarf unausgewertet archiviert werden. Im Regelfall werden die Kamerabilder jedoch direkt an die Auswerteeinheit gesandt und nicht direkt in der Archivierungseinheit gespeichert.

Es kann bei den bekannten Inspektionsvorrichtungen und -verfahren in äußerst seltenen Fällen vorkommen, dass ein fehlerhafter Behälter unerkannt bleibt und dann vom Endkunden reklamiert wird. Es ist dann aber oftmals nicht mehr möglich, die Fehlerquelle einwandfrei zu identifizieren, beispielsweise ob der Fehler bei der Behälterbehandlung oder erst auf dem Weg zum Endkunden entstanden ist. Darüber hinaus kann die Funktionsweise der Inspektionsvorrichtung bzw. des Inspektionsverfahrens nach einer Reklamation oftmals nicht mehr überprüft werden.

Aufgabe der vorliegenden Erfindung ist es daher, eine Inspektionsvorrichtung und ein Inspektionsverfahren zur Inspektion von Behältern bereitzustellen, die es bei unerkannt fehlerhaften Behältern verbessert erlauben, die Fehlerquelle zu identifizieren und die Funktionsweise der Inspektionsvorrichtung bzw. des Inspektionsverfahrens zu überprüfen.

Zur Lösung dieser Aufgabenstellung stellt die Erfindung eine Inspektionsvorrichtung mit den Merkmalen des Anspruchs 1 bereit. Vorteilhafte Ausführungsformen der Erfindung sind in den Unteransprüchen genannt.

Dadurch, dass die Inspektionsvorrichtung eine über eine zweite Bilddatenverbindung verbundene Archivierungseinheit für die Kamerabilder umfasst, mit der die Kamerabilder aller inspizierten Behälter während einer Zeitspanne unausgewertet archiviert werden, kann das oder die Kamerabi-lder eines unerkannt fehlerhaften Behälters nach seinem Produktionsdatum dann innerhalb der Zeitspanne wieder abgerufen und auf bisher unerkannte Fehler hin analysiert werden. Ist beispielsweise der Fehler in dem oder den Kamerabildern des unerkannt fehlerhaften Behälters nicht sichtbar, so kann davon ausgegangen werden, dass dieser erst nach Durchlaufen der Inspektionsvorrichtung aufgetreten ist. Umgekehrt, falls der Fehler sichtbar ist, so können das oder die Kamerabilder dazu herangezogen werden, die Inspektionsvorrichtung zu verbessern. Folglich ist es also bei der erfindungsgemäßen Inspektionsvorrichtung verbessert möglich, bei unerkannt fehlerhaften Behältern die Fehlerquelle zu identifizieren und die Funktionsweise der Inspektionsvorrichtung zu überprüfen bzw. die Inspektionsverfahren zu verbessern. Das gilt insbesondere im Zusammenhang mit Inspektionsverfahren die auf Basis von künstlicher Intelligenz (KI) arbeiten und mittels Grenzwertmustern besonders effektiv trainiert werden können.

Die Inspektionsvorrichtung kann in einer Behälterbehandlungsanlage angeordnet sein. Die Inspektionsvorrichtung kann einer Behälterbehandlungsmaschine vor- und/oder nachgeordnet sein. Die Behälterbehandlungsmaschine kann beispielsweise eine Behälterherstellungsanlage (beispielsweise eine Streckblasmaschine), eine Recyclinganlage für Behälter, ein Rinser, eine Sortiermaschine, ein Füller, ein Verschließer, eine Etikettiermaschine, eine Direktdruckmaschine, Leerflaschen- und/ oder Vollflascheninspektionsmaschine, bildgebende Röntgenanlage und/oder eine Verpackungsmaschine umfassen. Vorzugsweise kann die Inspektionsvorrichtung einem Füller zum Abfüllen eines Produkts in die Behälter und/oder einem Verschließer zum Aufbringen von Verschlüssen auf die Behälter nachgeordnet sein. Denkbar ist auch, dass die Inspektionsvorrichtung einer Sortiervorrichtung für Mehrwegflaschen oder einer modularen Kontrolleinrichtung zur Füllhöheninspektion oder Verschlusskontrolle zugeordnet ist. Vorzugsweise kann die Inspektionsvorrichtung als Leerflaschen- und/ oder Vollflascheninspektionsvorrichtung ausgebildet sein.

Die Behälter können dazu vorgesehen sein, Getränke, Hygieneartikel, Pasten, chemische, biologische und/oder pharmazeutische Produkte aufzunehmen. Die Behälter sind Kunststoffflaschen, Glasflaschen, Dosen und/oder Tuben. Bei Kunststoffbehältern kann es sich im speziellen um PET-, PEN-, HD-PE- oder PP-Behälter bzw. Flaschen handeln. Ebenso kann es sich um biologisch abbaubare Behälter oder Flaschen handeln, deren Hauptbestandteile aus nachwachsenden Rohstoffen, wie z.B. Zuckerrohr, Weizen oder Mais bestehen. Die Behälter können mit einem Produkt befüllt und/oder mit einem Verschluss versehen sein.

Die fehlerhaften Behälter können beispielsweise Verschleißerscheinungen, Risse, Abplatzer, Fremdkörper oder dergleichen aufweisen, die sich insbesondere nachteilig auf ein in die Behälter abgefülltes Produkt auswirken. Fremdkörper können hier vorzugsweise kornartige Körper umfassen, beispielsweise Glassplitter, Sand und/oder Rückstände von Reinigungsmitteln oder dergleichen.

Der Transporteur zum Transport der Behälter kann ein Förderband und/oder ein Karussell umfassen. Die Drehachse des Karussells kann im Wesentlichen vertikal, also auf den Erdmittelpunkt gerichtet sein. Denkbar ist, dass der Transporteur Behälteraufnahmen umfasst, mit denen die Behälter jeweils aufgenommen werden.

Die Kameraeinheit kann Teil eines optischen Messkopfs sein. Die Kameraeinheit kann mit einem CCD- oder CMOS-Bildsensor ausgebildet sein. Ferner kann die Kameraeinheit als Zeilen- oder Matrix-Kamera ausgebildet sein. Die Kameraeinheit kann derart angeordnet sein, dass sie bei der Inspektion die Behältermündung, die Behälterseitenwand und/oder den Behälterboden erfasst. Denkbar ist auch, dass die Kameraeinheit derart angeordnet ist, dass sie bei der Inspektion den Behälterboden durch die Behältermündung hindurch erfasst. Die Kameraeinheit kann eine digitale Datenschnittstelle umfassen, um die Kamerabilder zur Bildauswerteeinheit und/oder zur Archivierungseinheit hin auszugeben.

Die Inspektionsvorrichtung kann eine Beleuchtungseinheit umfassen, mit der die Behälter be- und/oder durchleuchtet werden. Vorzugsweise kann die Beleuchtungseinheit eine flächige Lichtaustrittsfläche umfassen, die am Transporteur gegenüberliegend zur Kameraeinheit angeordnet ist.

Die Bildauswerteeinheit kann als Computersystem ausgebildet sein, insbesondere extern außerhalb oder intern in der Kamera. Vorzugsweise kann die Bildauswerteeinheit in einer Maschinensteuerung der Inspektionsvorrichtung integriert sein. Die Bildauswerteeinheit kann eine CPU (Central Processing Unit), eine GPU (Graphics Processing Unit), einen Speicher, eine Massenspeichereinheit, eine Netzwerkschnittstelle, eine oder mehrere digitale Datenschnittstellen für die Kamerabilder, eine Ausgabeeinheit (Bildschirm), eine Eingabeeinheit (Tastatur und/oder Maus) und dergleichen umfassen. Die Bildauswerteeinheit kann ein Computerprogrammprodukt mit maschinenlesbaren Instruktionen umfassen, die, wenn sie ausgeführt werden, die Kamerabilder auf die fehlerhaften Behälter hin analysieren. Die Bildauswerteeinheit kann eine digitale Datenschnittstelle umfassen, um die Kamerabilder von der Kameraeinheit einzulesen. Insbesondere kann die Bildauswerteeinheit eine Bildeinzugskarte umfassen, um die Kamerabilder von der Kameraeinheit einzulesen. Dass die "Kamerabilder zur Laufzeit" automatisch ausgewertet werden, kann hier bedeuten, dass sie im laufenden Betrieb der Inspektionsvorrichtung automatisch ausgewertet werden.

Die Bildauswerteeinheit kann dazu ausgebildet sein, Behälterinspektionsmerkmale in den Bildern mit Bildverarbeitungsalgorithmen zu erkennen. Beispielsweise kann es sich bei den Behälterinspektionsmerkmalen um eine Anzahl und/oder eine Art von Rissen, Fremdkörpern, Abnutzungen, etc. am gesamten oder Teilen des Behälters handeln. Ebenso ist denkbar, dass es sich bei den Behälterinspektionsmerkmalen um die Qualität eines Direktdrucks und/oder eines am Behälter angebrachten Etiketts handelt.

Bei den Korrekturmaßnahmen kann es sich zum Beispiel um das Ausschleusen der fehlerhaften Behälter mit einer Weiche oder deren Nachbehandlung handeln. Dementsprechend kann die Bildauswerteeinheit dazu ausgebildet sein, ein Signal auszugeben, um bei einem fehlerhaften Behälter eine oder mehrere Korrekturmaßnahmen auszulösen. Denkbar ist, dass die Inspektionsvorrichtung eine Weiche umfasst, um fehlerhafte Behälter auszuschleusen.

Die Archivierungseinheit kann eine digitale Datenschnittstelle umfassen, um die Kamerabilder von der Kameraeinheit oder von der Bildauswerteeinheit her einzulesen. Die Archivierungseinheit kann ein Computersystem und/oder eine Massenspeichereinheit umfassen.

Die digitalen Datenschnittstellen der Kameraeinheit, der Bildauswerteeinheit und/oder der Archivierungseinheit können jeweils unabhängig voneinander als Bilddatenschnittstelle ausgebildet sein, insbesondere als Hochgeschwindigkeitsdatenschnittstelle für Bild- und/oder Videodaten. Beispielsweise kann es sich bei der digitalen Datenschnittstelle um eine CameraLink-, GigE- oder 10 GigE-Schnittstelle handeln. Bei der Bildauswerteeinheit und/oder der Archivierungseinheit kann die digitale Datenschnittstelle in eine Bildeinzugskarte integriert sein.

Die erste Bilddatenverbindung kann die digitale Datenschnittstelle der Kameraeinheit mit der digitalen Datenschnittstelle der Bildauswerteeinheit verbinden. Bei der ersten Bilddatenverbindung und/oder der zweiten Bilddatenverbindung kann es sich jeweils um ein Bilddatenkabel handeln, mit der die digitalen Datenschnittstellen der Kameraeinheit, der Bildauswerteeinheit und/oder der Archivierungseinheit miteinander verbunden sind.

Bei der Zeitspanne kann es sich um einen Zeitraum handeln, über den die Kamerabilder archiviert werden sollen, insbesondere aufgrund von Anforderungen eines Betreibers der Behälterbehandlungsanlage und/oder aufgrund eines Zeitraums in dem von dem Betreiber Produktrückläufer zu erwarten sind. Es kann sich dabei beispielsweise um einen Zeitraum von wenigstens einem Tag, wenigstens einer Woche, wenigstens einem Monat oder wenigstens einem Jahr handeln.

Denkbar ist, dass bei der Archivierung mit den Kamerabildern ein Zeitstempel des Bildes und/oder die zur Inspektion verwendeten Parameter übertragen werden. Das kann zur Laufzeit erfolgen oder auch lediglich bei Parameteränderung. Ebenso können Daten bezüglich des fertigen Produktes übertragen werden, beispielsweise ein Mindesthaltbarkeitsdatum und/oder ein Produktionsdatum. Das Produktionsdatum kann eine Produktionszeit mit sekundengenauem, insbesondere mikrosekundengenauem Zeitstempel umfassen.

Die Archivierungseinheit ist über die zweite Bilddatenverbindung mit der Kameraeinheit oder mit der Bildauswerteeinheit verbunden, um die Kamerabilder vor der automatischen Auswertung als unausgewerteter Bilddatenstrom zur Archivierungseinheit hin zu spiegeln. Dadurch bleibt die Bildauswerteeinheit mit der Archivierung selbst unbelastet, so dass die Erkennungsleistung unberührt bleibt. Die zweite Bilddatenverbindung kann mit den digitalen Datenschnittstellen der Kameraeinheit, der Bildauswerteeinheit und/oder mit der Archivierungseinheit verbunden sein.

Die zweite Bilddatenverbindung ist an der digitalen Datenschnittstelle der Kameraeinheit oder der Bildauswerteeinheit oder über eine Datenweiche an die erste Bilddatenverbindung angekoppelt. Denkbar ist, dass die Bildauswerteeinheit zwei der digitalen Datenschnittstellen umfasst, wobei eine mit der Kameraeinheit und die andere mit der Archivierungseinheit verbunden ist. Alternativ ist denkbar, dass die Archivierungseinheit zwei der digitalen Datenschnittstellen umfasst, wobei eine mit der Kameraeinheit und die andere mit Bildauswerteeinheit verbunden ist. Dadurch werden die Kamerabilder ohne Verarbeitungsaufwand durch die Bildauswerteeinheit oder die Archivierungseinheit durchgeschleust. Bei der Datenweiche handelt es sich um eine Elektronikeinheit, die die Kamerabilder von der Kameraeinheit empfängt und gleichermaßen an die Bildauswerteeinheit und an die Archivierungseinheit weitergibt.

Die Inspektionsvorrichtung kann eine Erkennungseinheit für behälterindividuelle Kennzeichnungselement umfassen, um die Behälter jeweils einem oder mehreren der Kamerabilder zuzuordnen. Dadurch kann ein unerkannt fehlerhafter Behälter besonders schnell einem oder mehreren archivierten Kamerabildern zugeordnet werden. Die Erkennungseinheit kann Teil der Bildauswerteeinheit oder der Archivierungseinheit sein. Denkbar ist jedoch auch, dass es sich dabei um eine separate Einheit handelt. Bei den behälterindividuellen Kennzeichnungselementen kann es sich beispielsweise um einen 1D- oder 2Dcode, einen individuellen Aufdruck, eine individuelle Gravur oder dergleichen handeln. Denkbar ist hier beispielsweise eine Lasergravur. Der Behälter kann ebenso ohne individuelle Kennzeichnung identifiziert werden, weil die Behälter herstellungsbedingt unterschiedliche Toleranzen wie ungleichmäßige Materialverteilung an Wand und/ oder Boden oder unterschiedlich ausgeprägte Bodenriffelung, Perldekor oder Anspritzpunkt aufweisen können. Ebenso können vorzugsweise Mehrwegbehälter anhand ihrer Abnutzungsspuren identifiziert und zugeordnet werden.

Die Archivierungseinheit kann einen Massendatenspeicher umfassen, um die Kamerabilder eines Teils oder aller während der Zeitspanne inspizierten Behälter auf dem Massendatenspeicher zu archivieren. Dadurch können die Kamerabilder über eine besonders lange Zeitspanne kostengünstig archiviert werden. Bei dem Massendatenspeicher kann es sich beispielsweise um einen Magnetdatenträger handeln, wie beispielsweise eine Festplatte oder ein Magnetband.

Denkbar ist auch, dass der Massendatenspeicher mit einem wechselbaren Datenträger ausgebildet ist, um die archivierten Kamerabilder auf mehrere Datenträger zu verteilen. Beispielsweise kann es sich dabei um eine wechselbare Festplatte oder ein wechselbares Magnetband handeln. Zudem ist denkbar, dass der Massendatenspeicher ein oder mehrere Magazine mit wechselbaren Datenträgern und einen automatischen Wechselmechanismus für die wechselbaren Datenträger umfasst, beispielsweise eine Tape-Library.

Darüber hinaus ist denkbar, dass die Archivierungseinheit über eine Netzwerkschnittstelle mit einem Netzwerkdatenspeicher verbunden ist, um die Kamerabilder eines Teils oder aller während der Zeitspanne inspizierten Behälter auf dem Netzwerkdatenspeicher zu archivieren. Dadurch kann der Speicherplatz für die archivierten Kamerabilder besonders flexibel aufgebaut werden.

Denkbar ist, dass der Netzwerkdatenspeicher innerhalb der Behälterbehandlungsanlage oder getrennt davon angeordnet ist. Beispielsweise kann der Netzwerkdatenspeicher mit der Archivierungseinheit über das Internet verbunden sein.

Die Archivierungseinheit kann eine Bildkompressionseinheit umfassen, um die Kamerabilder vor der Archivierung verlustfrei oder verlustbehaftet zu komprimieren. Dadurch kann Speicherplatz für die Kamerabilder eingespart werden. Bei der verlustbehafteten Kompression kann ein Betreiber der Behälterbehandlungsanlage vorgeben, welcher Bilddetailgrad bei der Archivierung gewünscht ist. Die Bildkompressionseinheit kann eine Hardwarekompressionseinheit umfassen. Dadurch erfolgt die Kompression besonders schnell.

Darüber hinaus stellt die Erfindung zur Lösung der Aufgabenstellung eine Behälterbehandlungsanlage zur Behandlung von Behältern mit wenigstens einer Behälterbehandlungsmaschine und mit einer Inspektionsvorrichtung nach einem der Ansprüche 1 - 6 bereit. Eine weitere Ausführungsform der Behälterbehandlungsanlage ist im Unteranspruch genannt. Des Weiteren kann die Behälterbehandlungsanlage die zuvor beschriebenen Merkmale einzelnen oder in beliebigen Kombinationen umfassen.

Die Behälterbehandlungsanlage kann die eine Behälterbehandlungsmaschine oder auch mehrere Behälterbehandlungsmaschinen umfassen. Mit "Behälterbehandlungsmaschine" kann hier beispielsweise eine Behälterherstellungsanlage (beispielsweise eine Streckblasmaschine), eine Recyclinganlage für Behälter, ein Rinser, eine Sortiermaschine, ein Füller, ein Verschließer, eine Etikettiermaschine, eine Direktdruckmaschine und/oder eine Verpackungsmaschine gemeint sein.

Die Inspektionsvorrichtung kann der wenigstens einen Behälterbehandlungsmaschine vor- und/oder nachgeordnet sein. Ebenso kann die Inspektionsvorrichtung Bestandteil einer Behälterbehandlungsmaschine sein oder als Inspektionsmaschine bevorzugt als Leerflaschen- und/ oder Vollflascheninspektionsmaschine ausgeführt sein. Vorzugsweise kann die Inspektionsvorrichtung einem Füller zum Abfüllen eines Produkts in die Behälter und/oder einem Verschließer zum Aufbringen von Verschlüssen auf die Behälter nachgeordnet sein. Denkbar ist auch, dass die Inspektionsvorrichtung einer Sortiervorrichtung für Mehrwegflaschen oder einer modularen Kontrolleinrichtung zur Füllhöheninspektion oder Verschlusskontrolle zugeordnet ist.

Die Behälterbehandlungsanlage kann eine Kennzeichnungsvorrichtung umfassen, die dazu ausgebildet ist, die behälterindividuellen Kennzeichnungselemente auf den Behältern anzubringen. Denkbar ist, dass die Kennzeichnungsvorrichtung eine Druck- oder Graviereinheit, insbesondere eine Lasergraviereinheit umfasst. Zudem ist denkbar, dass die Kennzeichnungsvorrichtung eine Direktdruckmaschine zum Aufbringen eines Direktdrucks auf die Behälter umfasst.

Darüber hinaus stellt die Erfindung zur Lösung der Aufgabenstellung ein Inspektionsverfahren zur Inspektion von Behältern mit den Merkmalen des Anspruchs 9 bereit. Vorteilhafte Ausführungsformen der Erfindung sind in den Unteransprüchen genannt.

Dadurch, dass bei dem Inspektionsverfahren die Kamerabilder aller inspizierten Behälter während einer Zeitspanne unausgewertet über eine zusätzlich zur ersten Bilddatenverbindung vorhandene, zweite Bilddatenverbindung zu der Archivierungseinheit hin übertragen und archiviert werden, kann das oder die Kamerabilder eines unerkannt fehlerhaften Behälters nach seinem Produktionsdatum dann innerhalb der Zeitspanne wieder abgerufen und auf bisher unerkannte Fehler hin analysiert werden. Ist beispielsweise der Fehler in dem oder den Kamerabildern des unerkannt fehlerhaften Behälters nicht sichtbar, so kann davon ausgegangen werden, dass dieser erst nach der Inspektion aufgetreten ist. Umgekehrt, falls der Fehler sichtbar ist, so können das oder die Kamerabilder dazu herangezogen werden, das Inspektionsverfahren zu verbessern. Folglich ist es also bei dem erfindungsgemäßen Inspektionsverfahren verbessert möglich, bei unerkannt fehlerhaften Behältern die Fehlerquelle zu identifizieren und die Funktionsweise des Inspektionsverfahrens zu überprüfen bzw. die Inspektionsverfahren zu verbessern.

Das Inspektionsverfahren zur Inspektion von Behältern kann mit der zuvor beschriebenen Inspektionsvorrichtung, insbesondere nach einem der Ansprüche 1 bis 7, und/oder mit der zuvor beschriebenen Behälterbehandlungsanlage, insbesondere nach einem der Ansprüche 8 oder 9, durchgeführt werden.

Die Kamerabilder werden vor der automatischen Auswertung über die zweite Bilddatenschnittstelle von der Kameraeinheit oder der Bildauswerteeinheit zur Archivierungseinheit hin gespiegelt. Dadurch wird die Bildauswerteeinheit nur wenig oder gar nicht mit der Archivierung der Kamerabilder belastet, so dass die Erkennungsgenauigkeit davon unberührt bleibt.

Die Behälter können mit behälterindividuellen Kennzeichnungselementen versehen werden, um sie den archivierten Kamerabildern zuzuordnen. Dadurch kann ein unerkannt fehlerhafter Behälter nach dem Rücklauf besonders einfach den archivierten Kamerabildern zugeordnet werden.

Die Kamerabilder eines Teils oder aller während der Zeitspanne inspizierten Behälter können auf einem Massendatenspeicher und/oder über eine Netzwerkschnittstelle auf einem Netzwerkdatenspeicher archiviert werden. Dadurch können die Kamerabilder ohne hohen Aufwand und besonders kostengünstig archiviert werden.

Denkbar ist, dass die Kamerabilder aus der Archivierungseinheit ausgelesen werden, um eine Fehlerquelle zu identifizieren und/oder um das Inspektionsverfahren zu überprüfen und/oder zu verbessern, insbesondere wobei das Inspektionsverfahren auf Basis von künstlicher Intelligenz arbeitet. Denkbar ist, dass von der Bildverarbeitungseinheit korrekt erkannte Merkmale und/oder Fehler als Metadaten zu der Archivierungseinheit hin übertragen werden. Dadurch kann das aufwändige manuelle Markieren der Bilddaten durch herkömmliche Bildverarbeitung vermieden werden. Dadurch erhalten die archivierten Kamerabilder ein Fehlermerkmal in den Metadaten oder in dem Dateinamen.

Weitere Merkmale und Vorteile der Erfindung werden nachfolgend anhand des in der Figur dargestellten Ausführungsbeispiels näher erläutert. Dabei zeigt:

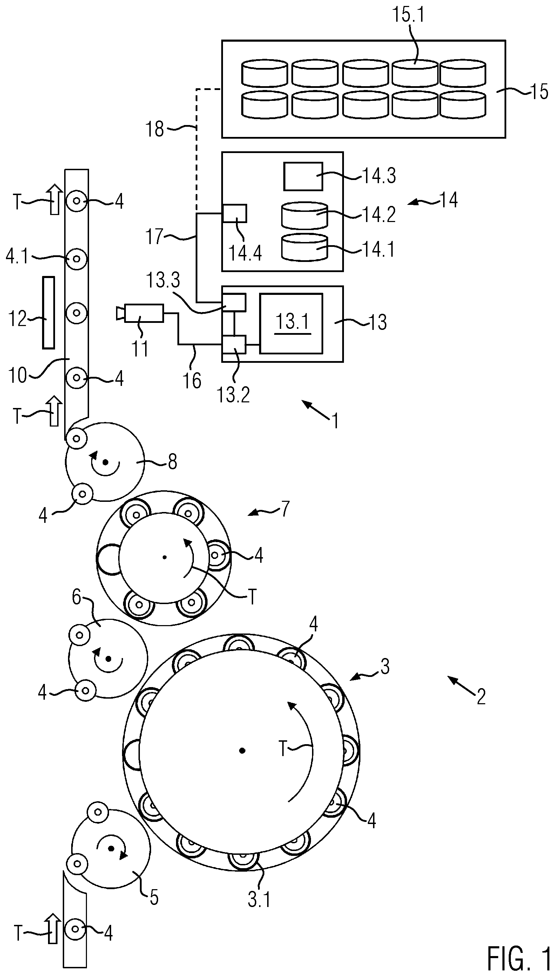

- Figur 1: ein erfindungsgemäßes Ausführungsbeispiel einer Behälterbehandlungsanlage mit Behälterbehandlungsmaschinen und mit einer Inspektionsvorrichtung in einer Draufsicht.

In der Figur 1 ist ein erfindungsgemäßes Ausführungsbeispiel einer Behälterbehandlungsanlage 2 mit den Behälterbehandlungsmaschinen 3, 7 und mit einer Inspektionsvorrichtung 1 in einer Draufsicht dargestellt. Zu sehen ist, dass die Behälter 4 entlang des Transportpfad T zunächst mit den Behälterbehandlungsmaschinen 3 und 7 behandelt und anschließend mit der Inspektionsvorrichtung 1 inspiziert werden.

Die Behälterbehandlungsmaschinen 3 und 7 sind in dem Ausführungsbeispiel lediglich beispielhaft als Füller 3 und Verschließer 7 ausgebildet, können jedoch auch von einem anderen Typ Behälterbehandlungsmaschine sein. Beispielsweise können die Behälterbehandlungsmaschinen auch jeweils als Behälterherstellungsanlage, Recyclinganlage, Rinser, Sortiermaschine, Etikettiermaschine, Direktdruckmaschine, Leerflaschen- und/ oder Vollflascheninspektionsmaschine, bildgebende Röntgenanlage und/oder Verpackungsmaschine ausgebildet sein.

Die leeren Behälter 4 werden zunächst über den Zulaufstern 5 dem Karussell des Füllers 3 zugeführt. Dort werden die Behälter 4 in Behälteraufnahmen 3.1 aufgenommen und mittels hier nicht dargestellter Füllorgane mit einem fließfähigen Produkt befüllt, beispielsweise mit einem Getränk. Anschließend werden die befüllten Behälter 4 mit dem Zwischenstern 6 dem Karussell des Verschließers 7 übergeben und dort mit Verschlusskappen versehen. Die so verschlossenen Behälter 4 werden anschließend mit dem Abführstern 8 dem Transporteur 10 der Inspektionsvorrichtung 1 übergeben und inspiziert.

Die Inspektionsvorrichtung 1 umfasst den Transporteur 10 zum Transport der Behälter 4 als Behälterstrom, die Kameraeinheit 11, mit der die Behälter 4 optisch als Kamerabilder erfasst werden, und die Bildauswerteeinheit 13, die zur automatischen Auswertung der Kamerabilder ausgebildet ist, um fehlerhafte Behälter 4.1 zu erkennen und dafür Korrekturmaßnahmen auszulösen. Lediglich beispielhaft ist hier noch die Beleuchtungseinheit 12 zu sehen, die gegenüberliegend zur Kameraeinheit 11 am Transporteur 10 angeordnet ist, um die Behälter 4 bei der Inspektion zu durchleuchten.

Die Bildauswerteeinheit 13 ist hier als Computersystem mit der Bildverarbeitungseinheit 13.1 ausgebildet. Sie umfasst beispielsweise eine CPU, einen Speicher, einen Bildschirm und eine Eingabeeinheit sowie die digitale Datenschnittstelle 13.2, mit der sie über die erste Bilddatenverbindung 16 zur Kameraeinheit 11 hin verbunden ist. Darüber können die von der Kameraeinheit 11 erfassten Kamerabilder zur Bildverarbeitungseinheit 13.1 übertragen und dort mittels Bildverarbeitungsalgorithmen eines Computerprogrammprodukts auf Fehler hin ausgewertet werden. Beispielsweise könnten damit Fremdkörper in den Behältern 4 erkannt werden.

Werden bei der Inspektion fehlerhafte Behälter 4.1 erkannt, so werden entsprechende Korrekturmaßnahmen ausgelöst, beispielsweise dass der fehlerhafte Behälter 4.1 mit einer hier nicht dargestellten Weiche ausgeschleust oder auch nachbehandelt wird.

Allerdings kann es in sehr seltenen Fällen dennoch vorkommen, dass ein fehlerhafter Behälter, dessen Beschädigung und/ oder Verschmutzung u.U. kleiner ist als erkennungstechnisch vom Hersteller zugesichert ist, 4.1 unerkannt bleibt und dann vom Endverbraucher innerhalb einer Zeitspanne reklamiert wird.

Für einen derartigen Fall umfasst die Inspektionsvorrichtung 1 zusätzlich zur Bildauswerteeinheit 13 die Archivierungseinheit 14, um die Kamerabilder aller inspizierten Behälter 4 während der Zeitspanne als Rohdaten zu archivieren. Dadurch können das oder die Kamerabilder eines unerkannt fehlerhaften Behälters auch innerhalb der Zeitspanne für längere Zeit nach seinem Produktionsdatum wieder abgerufen und auf reklamierte Fehler hin analysiert werden. Die Zeitspanne wird üblicherweise vom Betreiber der Behälterbehandlungsanlage 2 festgelegt und kann beispielsweise die Zeitspanne sein, in der der Betreiber Rückläufer erwartet. Es kann sich dabei beispielsweise um eine längere Zeitspanne von wenigstens einem Tag, wenigstens einer Woche, wenigstens einem Monat oder wenigstens einem Jahr handeln. Dadurch, dass die Archivierungseinheit 14 zusätzlich zu der Bildauswerteeinheit 13 vorhanden ist, wird die Bildauswerteeinheit 13 nicht zusätzlich mit der Archivierung belastet.

Die Archivierungseinheit 14 ist in diesem Ausführungsbeispiel über eine zweite Bilddatenverbindung 17 mit der Bildauswerteeinheit 13 verbunden, wobei die Kamerabilder vor der automatischen Auswertung unausgewertet zur Archivierungseinheit 14 hin gespiegelt werden. Dazu werden die Kamerabilder ausgehend von der Kameraeinheit 11 über die erste Bilddatenverbindung 16 von der ersten digitalen Datenschnittstelle 13.2 der Bildauswerteeinheit 13 empfangen und direkt zu ihrer zweiten digitalen Datenschnittstelle 13.3 durchgeschleift. Von dort werden sie über die zweite Bilddatenverbindung 16 zur digitalen Datenschnittstelle 14.4 der Archivierungseinheit 14 hin übertragen.

Alternativ ist auch denkbar, dass die Kameraeinheit 11 direkt mit der Archivierungseinheit 14 verbunden ist und von dort die Kamerabilder zur Kameraeinheit 11 hin durchgeschleift werden. Weiterhin alternativ ist auch denkbar, dass die zweite Bilddatenverbindung 17 an die erste Bilddatenverbindung 16 angekoppelt ist, beispielsweise über eine Datenweiche.

Bevorzugt werden mit den Kamerabildern ein Zeitstempel des Bildes übertragen und besonders bevorzugt werden die zur Inspektion verwendeten Parameter übertragen. Das kann zur Laufzeit erfolgen oder auch lediglich bei Parameteränderung. Ebenso können Daten bezüglich des fertigen Produktes übertragen werden, beispielsweise ein Mindesthaltbarkeitsdatum und/oder ein Produktionsdatum. Das Produktionsdatum kann eine Produktionszeit mit sekundengenauem, insbesondere mikrosekundengenauem Zeitstempel umfassen.

Die von der digitalen Datenschnittstelle 14.4 empfangenen Kamerabilder werden dann innerhalb der Archivierungseinheit 14 auf den Massendatenspeichern 14.1, 14.2 abgespeichert und archiviert. Denkbar ist, dass die Kamerabilder eines Teils oder aller während der Zeitspanne inspizierten Behälter 4 auf den Massendatenspeichern 14.1, 14.2 archiviert werden. Dies hängt lediglich von deren Speicherkapazität ab. Denkbar ist auch, dass die Massendatenspeicher 14.1, 14.2 als wechselbare Datenträger ausgebildet sind, um die archivierten Kamerabilder auf mehreren Datenträgern zu verteilen.

Zu sehen ist auch, dass die Archivierungseinheit 14 die Erkennungseinheit 14.3 erfasst, mit der behälterindividuelle Kennzeichnungselemente an den Behältern 4 erkennbar sind. Die Erkennungseinheit 14.3 umfasst ihrerseits eine Bildverarbeitungseinheit, die die empfangenen Kamerabilder in Echtzeit auf die behälterindividuellen Kennzeichnungselemente hin auswertet, beispielsweise auf eine Lasergravur hin. Diese kann beispielsweise mit einer hier nicht dargestellten Kennzeichnungsvorrichtung vor oder nach dem Füller 3 bzw. Verschließer 7 auf die Behälter 4 aufgebracht werden.

Die von der Erkennungseinheit 14.3 erkannten behälterindividuellen Kennzeichnungselemente werden dem oder den Kamerabildern des entsprechenden Behälters 4 zugeordnet, beispielsweise in einer Datenbank oder in einer Indextabelle. Dadurch können dann bei einer späteren Reklamation eines unerkannt fehlerhaften Behälters 4 die zugeordneten Kamerabilder besonders einfach wieder aus der Archivierungseinheit 14 ausgelesen und analysiert werden.

Zusätzlich ist auch denkbar, dass die Archivierungseinheit 14 über eine Netzwerkschnittstelle 18 mit einem Netzwerkdatenspeicher 15 verbunden ist, der die Massendatenspeicher 15.1 umfasst. Dadurch können die Kamerabilder über eine besonders lange Zeitspanne flexibel archiviert werden. Denkbar ist, dass die Kamerabilder in der Archivierungseinheit 14 zunächst auf deren Massendatenspeicher 14.1, 14.2 gepuffert und dann an den Netzwerkdatenspeicher 15 übertragen werden. Denkbar ist dabei, dass es sich bei der Netzwerkschnittstelle 18 wenigstens teilweise um das Internet handelt, so dass der Netzwerkdatenspeicher 15 entfernt von der Behälterbehandlungsanlage 2 in einem anderen Gebäude oder sogar bei einem Dienstleister zur Datenspeicherung angeordnet ist. Dadurch kann der Betreiber der Behälterbehandlungsanlage 2, je nach Bedarf, den Speicherplatz der Massendatenspeicher 15.1 flexibel buchen und verwalten.

Ebenso ist denkbar, dass die Archivierungseinheit 14 keine eigenen Massendatenspeicher umfasst, sondern die Kamerabilder davon direkt an den Netzwerkdatenspeicher 15 übertragen werden. Beispielsweise kann es sich dann bei der Netzwerkdatenschnittstelle 18 um eine Hochgeschwindigkeitsdatenschnittstelle handeln. Dadurch ist der Aufwand für die Archivierung noch geringer.

Die in der Figur 1 dargestellte Inspektionsvorrichtung 1 wird wie folgt eingesetzt:
Die Behälter 4 werden mit dem Transporteur 10 als Behälterstrom transportiert, wobei die Behälter 4 mit der Kameraeinheit 11 als Kamerabilder optisch erfasst werden, wobei die Kamerabilder mit der Bildauswerteeinheit 13 automatisch ausgewertet werden, und wobei fehlerhafte Behälter 4.1 erkannt und dafür Korrekturmaßnahmen ausgelöst werden. Zudem werden die Kamerabilder aller inspizierten Behälter 4 während einer Zeitspanne mit der zusätzlich zur Bildauswerteeinheit 13 vorhandenen Archivierungseinheit 14 als Rohdaten archiviert, wobei die Kamerabilder über die erste Bilddatenverbindung 16 von der Kameraeinheit 11 zur Bildauswerteeinheit 13 übertragen werden, und wobei die Kamerabilder vor der automatischen Auswertung über die zweite Bilddatenverbindung 17 von der Bildauswerteeinheit 13 zu Archivierungseinheit 14 hin gespiegelt werden.

Zudem werden die Behälter 4 mit behälterindividuellen Kennzeichnungselementen versehen, so dass die archivierten Kamerabilder den individuellen Behältern 4 zugeordnet werden können.

Bevorzugt werden die archivierten Kamerabilder nach einem bestimmten Zeitintervall automatisch gelöscht. Das kann beispielsweise nach dem auf dem Produkt angegebenen Mindesthaltbarkeitsdatum sein.

Denkbar ist, dass die Kamerabilder eines Teils oder aller während der Zeitspanne inspizierten Behälter 4 auf dem Massendatenspeicher 14.1, 14.2 der Archivierungseinheit 14 und/oder über eine Netzwerkdatenschnittstelle 18 auf einem Netzwerkdatenspeicher 15 archiviert werden.

Es versteht sich, dass in dem zuvor beschriebenen Ausführungsbeispiel genannte Merkmale nicht auf diese Merkmalskombination beschränkt sind sondern auch einzelnen oder in beliebigen anderen Kombinationen möglich sind.

## Patentansprüche

1. Inspektionsvorrichtung (1) zur Inspektion von als Kunststoffflaschen, Glasflaschen, Dosen und/oder Tuben ausgebildeten Behältern (4), mit
- einem Transporteur (10) zum Transport der Behälter (4) als Behälterstrom,
- einer Kameraeinheit (11), mit der die Behälter (4) optisch als Kamerabilder erfasst werden,
- einer Bildauswerteeinheit (13), die über eine erste Bilddatenverbindung (16) mit der Kameraeinheit (11) verbunden ist und die zur automatischen Auswertung der Kamerabilder zur Laufzeit ausgebildet ist, um fehlerhafte Behälter (4.1) zu erkennen und dafür Korrekturmaßnahmen auszulösen, und
- einer Archivierungseinheit (14) für die Kamerabilder,
wobei die Archivierungseinheit (14) über eine zweite Bilddatenverbindung (17) mit der Kameraeinheit (11) oder mit der Bildauswerteeinheit (13) verbunden
und dazu konfiguriert ist, die Kamerabilder vor der automatischen Auswertung als unausgewerteter Bilddatenstrom zur Archivierungseinheit (14) hin zu spiegeln und so die Kamerabilder aller inspizierten Behälter (4) während einer Zeitspanne unausgewertet zu archivieren, und wobei die zweite Bilddatenverbindung (17):
- an eine digitale Datenschnittstelle (13.3) der Bildauswerteeinheit (13) angekoppelt ist und diese zwei digitale Datenschnittstellen (13.2, 13.3) umfasst, von denen eine mit der Kameraeinheit (11) und die andere mit der Archivierungseinheit (14) verbunden und dazu konfiguriert ist, die Kamerabilder ohne Verarbeitungsaufwand durch die Bildauswerteeinheit (13) durchzuschleusen; oder
- an eine digitale Datenschnittstelle der Kameraeinheit (11) angekoppelt ist und die Archivierungseinheit (14) zwei digitale Datenschnittstellen (14.4) umfasst, von denen eine mit der Kameraeinheit (11) und die andere mit der Bildauswerteeinheit (13) verbunden und dazu konfiguriert ist, die Kamerabilder ohne Verarbeitungsaufwand durch die Archivierungseinheit (14) durchzuschleusen; oder
- über eine Datenweiche an die erste Bilddatenverbindung (16) angekoppelt ist, wobei die Datenweiche eine Elektronikeinheit ist, die dazu konfiguriert ist, Kamerabilder von der Kameraeinheit (11) zu empfangen und gleichermaßen an die Bildauswerteeinheit (13) und an die Archivierungseinheit (14) weiterzugeben.

2. Inspektionsvorrichtung (1) nach einem der vorangegangen Ansprüche, wobei die Inspektionsvorrichtung (1) eine Erkennungseinheit (14.3) für behälterindividuelle Kennzeichnungselemente umfasst, um die Behälter (4) jeweils einem oder mehreren der Kamerabi-lder zuzuordnen.

3. Inspektionsvorrichtung (1) nach einem der vorangegangenen Ansprüche, wobei die Archivierungseinheit (14) einen Massendatenspeicher (14.1, 14.2) umfasst, der dazu konfiguriert ist, die Kamerabilder eines Teils oder aller während der Zeitspanne inspizierten Behälter (4) auf dem Massendatenspeicher (14.1, 14.2) zu archivieren.

4. Inspektionsvorrichtung (1) nach Anspruch 3, wobei der Massendatenspeicher (14.1, 14.2) mit einem wechselbaren Datenträger ausgebildet ist, der dazu konfiguriert ist, die archivierten Kamerabi-lder auf mehrere Datenträger zu verteilen.

5. Inspektionsvorrichtung (1) nach einem der vorangegangen Ansprüche, wobei die Archivierungseinheit (14) über eine Netzwerkschnittstelle (18) mit einem Netzwerkdatenspeicher (15) verbunden ist, das dazu konfiguriert ist, die Kamerabilder eines Teils oder aller während der Zeitspanne inspizierten Behälter (4) auf dem Netzwerkdatenspeicher (15) zu archivieren.

6. Inspektionsvorrichtung (1) nach einem der vorangegangenen Ansprüche, wobei die Archivierungseinheit (14) eine Bildkompressionseinheit umfasst, die dazu konfiguriert ist, die Kamerabilder vor der Archivierung verlustfrei oder verlustbehaftet zu komprimieren.

7. Behälterbehandlungsanlage (2) zur Behandlung von Behältern (4), mit einer Behälterbehandlungsmaschine (3) und mit einer Inspektionsvorrichtung (1) nach einem der Ansprüche 1 - 6.

8. Behälterbehandlungsanlage (2) nach Anspruch 7, wobei die Behälterbehandlungsanlage (2) eine Kennzeichnungsvorrichtung umfasst, die dazu ausgebildet ist, behälterindividuelle Kennzeichnungselemente auf den Behältern (4) anzubringen.

9. Inspektionsverfahren zur Inspektion von Behältern (4), wobei die Behälter (4) Kunststoffflaschen, Glasflaschen, Dosen und/oder Tuben sind und mit einem Transporteur (10) als Behälterstrom transportiert werden, wobei die Behälter (4) mit einer Kameraeinheit (11) als Kamerabilder optisch erfasst werden, wobei die Kamerabilder von der Kameraeinheit (11) über eine erste Bilddatenverbindung (16) zu einer Bildauswerteeinheit (13) übertragen und damit zur Laufzeit automatisch ausgewertet werden, und wobei fehlerhafte Behälter (4.1) erkannt und dafür Korrekturmaßnahmen ausgelöst werden,
wobei die Kamerabilder aller inspizierten Behälter (4) während einer Zeitspanne unausgewertet über eine zusätzlich zur ersten Bilddatenverbindung (16) vorhandene, zweite Bilddatenverbindung (17) zu einer Archivierungseinheit (14) hin übertragen und archiviert werden,
wobei die Kamerabilder vor der automatischen Auswertung über die zweite Bilddatenverbindung (17) von der Kameraeinheit (11) oder der Bildauswerteeinheit (13) zur Archivierungseinheit (14) hin gespiegelt werden,
und wobei die zweite Bilddatenverbindung (17):
- an eine digitale Datenschnittstelle (13.3) der Bildauswerteeinheit (13) angekoppelt ist und diese zwei digitale Datenschnittstellen (13.2, 13.3) umfasst, von denen eine mit der Kameraeinheit (11) und die andere mit der Archivierungseinheit (14) verbunden ist, und die Kamerabilder ohne Verarbeitungsaufwand durch die Bildauswerteeinheit (13) durchgeschleust werden; oder
- an eine digitale Datenschnittstelle der Kameraeinheit (11) angekoppelt ist und die Archivierungseinheit (14) zwei digitale Datenschnittstellen (14.4) umfasst, von denen eine mit der Kameraeinheit (11) und die andere mit der Bildauswerteeinheit (13) verbunden ist, und die Kamerabilder ohne Verarbeitungsaufwand durch die Archivierungseinheit (14) durchgeschleust werden; oder
- über eine Datenweiche an die erste Bilddatenverbindung (16) angekoppelt ist, wobei die Datenweiche eine Elektronikeinheit ist und diese die Kamerabilder von der Kameraeinheit (11) empfängt und gleichermaßen an die Bildauswerteeinheit (13) und an die Archivierungseinheit (14) weitergibt.

10. Inspektionsverfahren nach Anspruch 9, wobei die Behälter (4) mit behälterindividuellen Kennzeichnungselementen versehen werden, um sie den archivierten Kamerabildern zuzuordnen.

11. Inspektionsverfahren nach einem der Ansprüche 9 - 10, wobei die Kamerabilder eines Teils oder aller während der Zeitspanne inspizierten Behälter (4) auf einem Massendatenspeicher (14.1, 14.2) und/oder über eine Netzwerkschnittstelle (18) auf einem Netzwerkdatenspeicher (15) archiviert werden.

12. Inspektionsverfahren nach einem der Ansprüche 9 - 11, wobei die Kamerabilder aus der Archivierungseinheit (14) ausgelesen werden, um eine Fehlerquelle zu identifizieren und/oder um das Inspektionsverfahren zu überprüfen und/oder zu verbessern, insbesondere wobei das Inspektionsverfahren auf Basis von künstlicher Intelligenz arbeitet.

## Claims

1. An inspection apparatus (1) for inspecting containers (4) configured as plastic bottles, glass bottles cans and/or tubes, including
- a conveyor (10) for conveying the containers (4) as a stream of containers,
- a camera unit (11) for optically capturing the containers (4) as camera images
- an image analyzing unit (13) connected to the camera unit (11) via a first image data connection (16) and configured to automatically analyze the camera images during operating time to detect defective containers (4.1) and initiate corrective action, and
- an archiving unit (14) for the camera images,
wherein the archiving unit (14) is connected to the camera unit (11) or the image analyzing unit (13) via a second image data connection (17) and is configured to mirror the camera pictures to the archiving unit (14) as an unanalyzed the stream of image data prior to automatically analyzing them thus archiving the camera images for inspected containers (4) during a period of time, and wherein the second image data connection (17)
- is coupled to a digital data interface (13.3) of the image analyzing unit (13) which comprises two digital data interfaces (13.2, 13.3) one of which is coupled to the camera unit (11) while the other one is coupled to the archiving unit (14) and configured to pass the camera images through the image analyzing unit (13) without processing load; or
- is coupled to a digital data interface of the camera unit (11), and the archiving unit (14) comprises two digital data interfaces (14.4) one of which is connected to the camera unit (11) and the other one is connected to the image analyzing unit (13) and configured to pass the camera images through the archiving unit (14) without processing load; or
- is coupled to the first image data connection (16) via a data switch, wherein the data switch is an electronic unit configured to receive camera images from the camera unit (11) and to transfer them equally to the image analyzing unit (13) and to the archiving unit (14).

2. The inspection apparatus (1) according to anyone of the preceding claims, wherein the inspection apparatus (1) comprises an identification unit (14.3) for container-specific identification elements for mapping the containers (4) to one or more of the camera images.

3. The inspection apparatus (1) according to anyone of the preceding claims, wherein the archiving unit (14) comprises a mass data storage (14.1, 14.2) configured to archive the camera images of a part or the entirety of all the containers (4) inspected during the period of time in the mass data storage (14.1, 14.2).

4. The inspection apparatus (1) according to claim 3, wherein the mass data storage (14.1, 14.2) is configured with a removable data storage medium configured to distribute the archived camera images to a plurality of storage media.

5. The inspection apparatus (1) according to anyone of the preceding claims, wherein the archiving unit (14) is connected to a network data storage (15) configured to archive the camera images of a part or the entirety of the containers (4) inspected during the period of time into the network data storage (15).via a network interface (18)

6. The inspection apparatus (1) according to anyone of the preceding claims, wherein the archiving unit (14) comprises an image compressing unit configured for lossless or lossy compression of the camera images prior to archiving.

7. A container treatment plant (2) for treating containers (4) including a container treatment machine (3) and an inspection apparatus (1) according to anyone of claims 1 - 6.

8. The container treatment plant (2) according to claim 7, wherein the container treatment plant (2) comprises an identification device configured to place container-specific identification elements onto the containers (4).

9. An inspection method for inspection of containers (4), wherein the containers (4) are plastic bottles, glass bottles, cans and/or tubes that are being conveyed with a conveyor (10) as a stream of containers, wherein the containers are optically captured has camera images with a camera unit (11), wherein the camera images are transferred from the camera unit (11) to an image analyzing unit (13) via a first image data connection (16) for automatically analyzing them during operating time, and wherein defective containers (4.1) are detected and corrective action is initiated,
wherein the camera images of all inspected containers (4) are transferred to an archiving unit (14) via a second image data connection (17) provided additionally to the first image data connection (16) and archived therein in an unanalyzed state during a period of time, wherein the camera images are mirrored to the archiving unit (14) from the camera unit (11) or the image analyzing unit (13) via the second image data connection (17) prior to automatically analyzing them,
and wherein the second image data connection (17)
- is coupled to a digital data interface (13.3) of the image analyzing unit (13) which comprises two digital data interfaces (13.2, 13.3) one of which is coupled to the camera unit (11) while the other one is coupled to the archiving unit (14) and the camera images are passed through the image analyzing unit (13) without processing load; or
- is coupled to a digital data interface of the camera unit (11) and the archiving unit (14) comprises two digital data interfaces (14.4) one of which is coupled to the camera unit (11) while the other one is coupled to the image analyzing unit (13) and the camera images are passed through the archiving unit (14) without processing load; or
- is coupled to the first image data connection (16) via a data switch, wherein the data switch is an electronic unit that receives the camera images from the camera unit (11) and transfers them equally to the image analyzing unit (13) and to the archiving unit (14).

10. The inspection method according to claim 9, wherein the containers (4) are provided with container-specific identification elements for mapping them to the archived camera images.

11. The inspection method according to anyone of claims 9 - 10, wherein the camera images of a part or the entirety of the containers (4) inspected during the period of time are archived in a mass data storage (14.1, 14.2) and/or in a network data storage (15) via a network interface (18).

12. The inspection method according to anyone of claims 9 - 11, wherein the camera images are read from the archiving unit (14) for identifying a source of errors and/or for checking and/or for improving the inspection method, wherein in particular the inspection method operates on the basis of artificial intelligence.

## Revendications

1. Dispositif d'inspection (1) pour l'inspection de récipients (4) conformés comme des bouteilles en plastique, des bouteilles en verre, des canettes et/ou des tubes, comportant
- un convoyeur (10) pour le transport des récipients (4) sous forme d'un flux de récipients,
- une unité de caméra (11) avec laquelle les récipients (4) sont détectés optiquement sous forme d'images de caméra,
- une unité d'évaluation d'images (13) connectée à l'unité de caméra (11) via une première connexion de données d'image (16) et conçue pour l'évaluation automatique des images de caméra en temps réel afin de détecter les récipients défectueux (4.1) et de déclencher des mesures correctives pour ceux-ci, et
- une unité d'archivage (14) pour les images de caméra,
dans lequel l'unité d'archivage (14) est connectée à l'unité de caméra (11) ou à l'unité d'évaluation d'images (13) via une deuxième connexion de données d'image (17) et est configurée pour renvoyer en miroir les images de caméra vers l'unité d'archivage (14) sous forme d'un flux de données d'image non évaluées avant l'évaluation automatique, et pour archiver ainsi les images de caméra non évaluées de tous les récipients inspectés (4) pendant une période donnée, et dans lequel la deuxième connexion de données d'image (17) :
- est couplée à une interface de données numérique (13.3) de l'unité d'évaluation d'images (13), qui comprend deux interfaces de données numériques (13.2, 13.3) dont l'une est connectée à l'unité de caméra (11) et l'autre à l'unité d'archivage (14), et est configurée pour faire transiter les images de caméra par l'unité d'évaluation d'images (13) sans aucun traitement ; ou
- est couplée à une interface de données numérique de l'unité de caméra (11), et l'unité d'archivage (14) comprend deux interfaces de données numériques (14.4) dont l'une est connectée à l'unité de caméra (11) et l'autre à l'unité d'évaluation d'images (13), et est configurée pour faire transiter les images de caméra par l'unité d'archivage (14) sans aucun traitement ; ou
- est couplée à la première connexion de données d'image (16) via un commutateur de données, dans lequel le commutateur de données est une unité électronique configurée pour recevoir les images de caméra de l'unité de caméra (11) et pour les transmettre aussi bien à l'unité d'évaluation d'images (13) qu'à l'unité d'archivage (14).

2. Dispositif d'inspection (1) selon l'une des revendications précédentes, dans lequel le dispositif d'inspection (1) comprend une unité de détection (14.3) pour les éléments de marquage spécifiques aux récipients afin d'associer à chaque récipient (4) une ou plusieurs des images de caméra.

3. Dispositif d'inspection (1) selon l'une des revendications précédentes, dans lequel l'unité d'archivage (14) comprend un stockage massif de données (14.1, 14.2) configuré pour archiver les images de caméra d'une partie ou de la totalité des récipients (4) inspectés pendant la période dans le stockage massif de données (14.1, 14.2).

4. Dispositif d'inspection (1) selon la revendication 3, dans lequel le stockage massif de données (14.1, 14.2) est conçu avec un support de données échangeable configuré pour distribuer les images de caméra archivées sur plusieurs supports de données.

5. Dispositif d'inspection (1) selon l'une des revendications précédentes, dans lequel l'unité d'archivage (14) est connectée via une interface réseau (18) à un stockage de données en réseau (15) configuré pour archiver sur le stockage de données en réseau (15) les images de caméra d'une partie ou de la totalité des récipients (4) inspectés pendant la période.

6. Dispositif d'inspection (1) selon l'une des revendications précédentes, dans lequel l'unité d'archivage (14) comprend une unité de compression d'image configurée pour compresser les images de caméra sans perte ou avec perte avant l'archivage.

7. Installation de manutention de récipients (2) pour la manutention de récipients (4), comprenant une machine de manutention de récipients (3) et un dispositif d'inspection (1) selon l'une des revendications 1 à 6.

8. Installation de manutention de récipients (2) selon la revendication 7, dans laquelle l'installation de manutention de récipients (2) comprend un dispositif de marquage configuré pour appliquer aux récipients (4) des éléments de marquage spécifiques aux récipients.

9. Procédé d'inspection de récipients (4),
dans lequel les récipients (4) sont des bouteilles en plastique, des bouteilles en verre, des canettes et/ou des tubes et sont transportés sous forme d'un flux de récipients par un convoyeur (10), dans lequel les récipients (4) sont détectés optiquement sous forme d'images de caméra par une unité de caméra (11), dans lequel les images de caméra sont transmises de l'unité de caméra (11) à une unité d'évaluation d'images (13) via une première connexion de données d'image (16) et sont ainsi évaluées automatiquement en temps réel, et dans lequel les récipients défectueux (4.1) sont détectés et des mesures correctives sont déclenchées pour ceux-ci,
dans lequel les images de caméra de tous les récipients inspectés (4) sont transmises à une unité d'archivage (14) et archivées sans évaluation pendant une période donnée via une deuxième connexion de données d'image (17) pourvue en plus de la première connexion de données d'image (16),
dans lequel les images de caméra sont renvoyées en miroir depuis l'unité de caméra (11) ou l'unité d'évaluation d'images (13) vers l'unité d'archivage (14) via la deuxième connexion de données d'image (17) avant l'évaluation automatique, et
dans lequel la deuxième connexion de données d'image (17) :
- est couplée à une interface de données numérique (13.3) de l'unité d'évaluation d'images (13) et celle-ci comprend deux interfaces de données numériques (13.2, 13.3) dont l'une est connectée à l'unité de caméra (11) et l'autre à l'unité d'archivage (14), et les images de caméra sont transmises via l'unité d'évaluation d'images (13) sans aucun traitement ; ou
- est couplée à une interface de données numérique de l'unité de caméra (11), et l'unité d'archivage (14) comprend deux interfaces de données numériques (14.4) dont l'une est connectée à l'unité de caméra (11) et l'autre à l'unité d'évaluation d'images (13), et les images de caméra sont transmises via l'unité d'archivage (14) sans aucun traitement ; ou
- est couplée à la première connexion de données d'image (16) via un commutateur de données, dans lequel le commutateur de données est une unité électronique qui reçoit les images de caméra de l'unité de caméra (11) et les transmet aussi bien à l'unité d'évaluation d'images (13) qu'à l'unité d'archivage (14).

10. Procédé d'inspection selon la revendication 9, dans lequel les récipients (4) sont pourvus d'éléments de marquage spécifiques aux récipients afin de les associer aux images de caméra archivées.

11. Procédé d'inspection selon l'une des revendications 9 à 10, dans lequel les images de caméra d'une partie ou de la totalité des récipients (4) inspectés pendant la période sont archivées dans un stockage massif de données (14.1, 14.2) et/ou dans un stockage de données en réseau (15) via une interface réseau (18).

12. Procédé d'inspection selon l'une des revendications 9 à 11, dans lequel les images de caméra sont lues à partir de l'unité d'archivage (14) pour identifier une source d'erreur et/ou pour vérifier et/ou améliorer le procédé d'inspection, en particulier dans lequel le procédé d'inspection est basé sur l'intelligence artificielle.
